# EUROPÄISCHE PATENTSCHRIFT

(11) **EP 3 676 152 B1**
(45) Veröffentlichungstag und Bekanntmachung des Hinweises auf die Patenterteilung: **04.08.2021**
(21) Anmeldenummer: 18792362.8
(22) Anmeldetag: 24.08.2018
(51) Int. Cl.: B62B 3/14, B62B 3/18

(54) **MIT GLEICHEN WAGEN STAPELBARER EINKAUFSWAGEN**
SHOPPING TROLLEY BEING NESTABLE WITH A SIMILAR TROLLEY
CHARIOT DE SUPERMARCHÉ EMPILABLE AVEC DES CHARIOTS DE SUPERMARCHÉ IDENTIQUES

(30) Priorität: 29.08.2017 DE 202017004527 U
(43) Veröffentlichungstag der Anmeldung: 08.07.2020
(73) Patentinhaber: Eberlein, Martin, 1124 Sofia (BG)
(72) Erfinder: Eberlein, Martin, 1124 Sofia (BG)
(86) Internationale Anmeldenummer: PCT/DE2018/000250
(87) Internationale Veröffentlichungsnummer: WO 2019/042489

(56) Entgegenhaltungen:
- WO-A2-2012/034556
- DE-A1-102010 045 455
- US-A1- 2011 062 675

## Beschreibung

Die Erfindung betrifft einen mit gleichen Wagen stapelbaren Einkaufswagen, mit einem Korb zur Aufnahme von Ware, mit einer faltbaren Kindersitzanordnung, die zum Verschließen des rückwärtigen offenen Bereichs des Korbes bestimmt ist und sich in das Korbinnere und wieder zurück bewegen lässt, wobei die Kindersitzanordnung eine mit zwei Beinlöchern ausgestattete Rückwand, eine an der Rückwand bewegbar gelagerte Rückenlehne, sowie eine Sitzeinrichtung aufweist, die in Gebrauchslage der Kindersitzanordnung als Sitzgelegenheit für ein Kleinkind nutzbar und zum Begrenzen des Schwenkbereichs der Rückenlehne vorgesehen ist, wobei die Kindersitzanordnung mit einer an der Rückwand schwenkbar angeordneten Abdeckeinrichtung ausgestattet ist, die auf der Sitzeinrichtung ruht und sich nach oben und wieder zurück schwenken lässt, um in nach oben geschwenkter Lage die Beinlöcher zu verschließen und um ebenfalls in dieser Lage zusammen mit der Sitzeinrichtung, der Rückwand und der Rückenlehne eine weitere Abstelleinrichtung für Ware zu bilden, und wobei in Nichtgebrauchslage, also in gefaltetem Zustand der Kindersitzanordnung, die Rückwand, die Sitzeinrichtung sowie die Abdeckeinrichtung eng aneinander liegen, die Sitzeinrichtung dabei nach unten hängt und die Abdeckeinrichtung nach oben gerichtet ist.

Einkaufswagen mit einer doppelt nutzbaren Kindersitzanordnung, wie eingangs beschrieben, sind durch ihre Verwendung in Selbstbedienungsgeschäften hin-reichend bekannt.

Die US 2011/0062675 A1 beschreibt einen derartigen Einkaufswagen.

In der WO 2012/034556 A2 sind Lösungsvorschläge beschrieben, wie eine faltbare, jedoch nicht mit einer Abdeckeinrichtung ausgestattete Kindersitzanordnung raumsparend gefaltet werden kann.

Es ist Aufgabe der Erfindung, einen Einkaufswagen der eingangs genannten Art so weiterzuentwickeln, dass dessen mit einer zusätzlichen Abdeckeinrichtung ausgestattete Kindersitzanordnung ebenfalls so raumsparend gefaltet werden kann, wie dies durch die WO 2012/034556 A2 angestrebt wird.

Die Lösung der Aufgabe ist im Anspruch 1 beschrieben.

Durch die vorgeschlagene Lösung wird in vorteilhafter Weise vermieden, dass die Dicke der Vorsprünge zur Vergrößerung der Dicke der gefalteten Kindersitzanordnung beiträgt. Eine derart ausgebildete und gefaltete Kindersitzanordnung kann sich somit an jenen Lösungen orientieren, wie diese in der WO 2012/034556 A2 vorgeschlagen werden.

Die Erfindung wird anhand eines Ausführungsbeispiels näher erläutert. Es zeigt
Fig. 1 einen Einkaufswagen mit einer in Gebrauchslage befindlichen Kindersitzeinrichtung sowie
Fig. 2 die gleiche Kindersitzeinrichtung in Nichtgebrauchslage und in Längsrichtung des Einkaufswagens betrachtet.

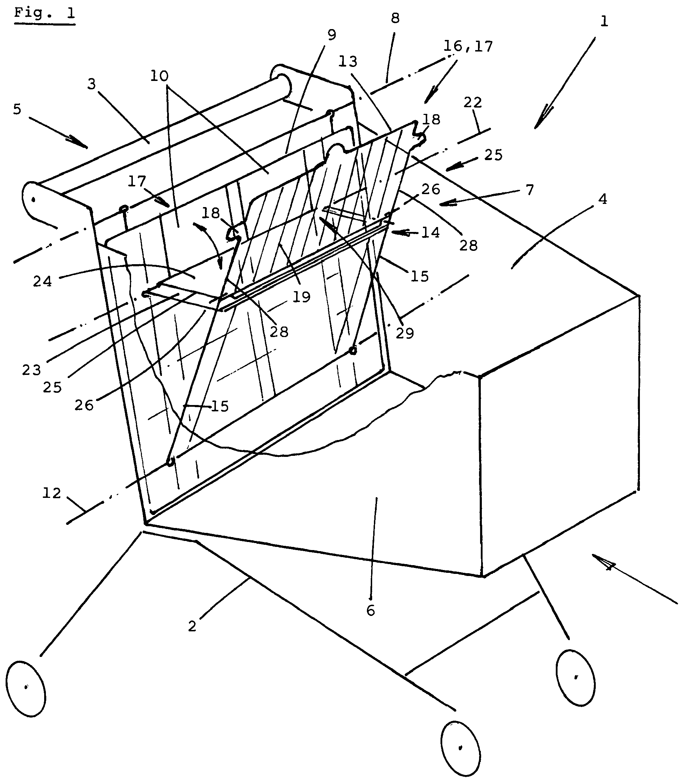

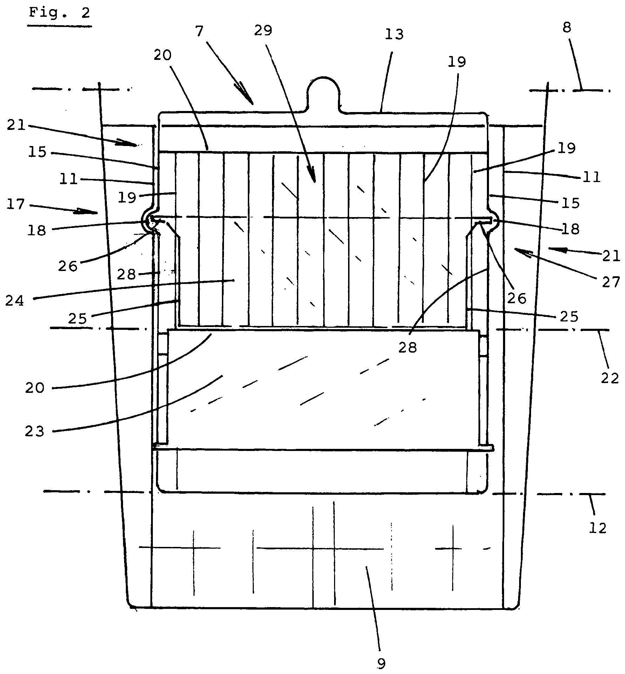

Der in Fig. 1 räumlich dargestellte Einkaufswagen 1 weist ein Fahrgestell 2, einen auf dem Fahrgestell angeordneten Korb 4 sowie rückseitig eine Schiebeeinrichtung 3 auf. Der bekanntermaßen rückwärtig offene Bereich 5 des Korbes 4 ist durch eine schwenkbare Kindersitzanordnung 7 verschlossen, die sich, zum Zwecke des platzsparenden Stapelns mit gleichen Einkaufswagen 1, in das Korbinnere verschwenken lässt. Die zum Bildbetrachter weisende Seitenwand 6 des Korbes 4 ist in der Zeichnung etwas aufgebrochen dargestellt, um die Kindersitzanordnung 7 besser zeigen zu können. Die Kindersitzanordnung 7 wird durch eine Rückwand 9, eine Rückenlehne 13, eine Sitzeinrichtung 23, und eine Abdeckeinrichtung 24 gebildet. Die Rückwand 9 ist um eine oben gelegene erste horizontale Achse 8 schwenkbar am Korb 4 gelagert, die Rückenlehne 13 ist um eine unten gelegene zweite horizontale Achse 12 schwenkbar an der Rückwand 9 gelagert und Sitzeinrichtung 23 und Abdeckeinrichtung 24 sind um eine oberhalb der zweiten horizontalen Achse 12 und unterhalb der ersten horizontalen Achse 8 gelegene dritte horizontale Achse 22 schwenkbar an der Rückwand 9 gelagert. Die Sitzeinrichtung 23 stützt sich an einem an der Rückenlehne 13 befindlichen Durchbruch 14 schiebebeweglich so ab, dass die Sitzeinrichtung 23 in bekannter Weise in Nichtgebrauchslage der Kindersitzanordnung 7 nach unten hängt, siehe Fig. 2. Die Abdeckeinrichtung 24 liegt, wie in der Zeichnung dargestellt, auf der Sitzeinrichtung 23 auf und ist in dieser Lage zusammen mit der Sitzeinrichtung 23, als Sitzauflage nutzbar. Die Rückwand 9 weist zwei Beinlöcher 10 für die Beine eines Kleinkindes auf, das auf der Sitzeinrichtung 23 bzw. der Sitzauflage Platz nehmen kann. Der an der Abdeckeinrichtung 24 eingezeichnete bogenförmige Doppelpfeil zeigt an, dass die Abdeckeinrichtung 24 zur Rückwand 9 hin nach oben und wieder zurück bewegbar ist, um in nach oben geschwenkter Lage die beiden Beinlöcher 10 zu verschließen, wenn es gilt, die Sitzeinrichtung 23 nicht als Sitzgelegenheit, sondern als zusätzliche Warenablage, z.B. zum Abstellen druckempfindlicher Ware zu nutzen. An ihren beiden in Längsrichtung des Einkaufswagens 1 verlaufenden Seiten 25, und in einem Abstand zur dritten horizontalen Achse 22 angeordnet, weist die Abdeckeinrichtung 24 jeweils einen Vorsprung 26 auf, wobei sich die Vorsprünge 26 gegenläufig nach außen erstrecken und jeder Vorsprung 26 an einem Gleitabschnitt 28 der Rückenlehne 13 anliegt, der in der in Fig. 1 gezeigten Ausführung durch einen vertikalen Stab 15 gebildet ist. Jeder vertikale Stab 15 ist in einem vorbestimmten Raumbereich 17, der sich jeweils im oberen Bereich 16 der Rückenlehne 13 befindet, von seiner vertikalen Richtung abweichend so geformt, dass an jedem vertikalen Stab 15 seitlich jeweils ein Raum 18 gebildet ist. Die Räume 18 sind im Beispiel seitlich nach außen gerichtet und daher spiegelbildlich angeordnet. Die Bedeutung der Räume 18 wird in Fig. 2 näher erläutert. Die Zeichnung verzichtet auf eine detaillierte Darstellung weiterer vertikaler, horizontaler, oder sonstiger Stäbe, welche die Rückwand 9 und die Rückenlehne 13 bilden, da eine Berücksichtigung dieser Stäbe die Zeichnung unübersichtlich machen würde. Es können sowohl mehr als auch weniger Stäbe vorhanden sein und es können Stäbe und deren Zwischenräume auch durch geschlossene Flächen ersetzt sein. Die Sitzeinrichtung 23 dient nicht nur als Sitz, sondern sie legt in bekannter Weise mittels hintergreifender Anschläge auch den Schwenkbereich der Rückenlehne 13 fest. Der eingezeichnete Pfeil wiederum zeigt die Längsrichtung des Einkaufswagens 1. Bringt man die Kindersitzanordnung 7 durch Bewegen der Rückenlehne 13 in die Gebrauchslage oder in die Nichtgebrauchslage, gleiten die Vorsprünge 26 der Abdeckeinrichtung 24 auf und entlang der Gleitabschnitte 28, in der Zeichnung an den vertikalen Stäben 15 der Rückenlehne 13.

Alternativ zur in der Zeichnung dargestellten Ausführung können die den Schwenkbereich der Rückenlehne 13 festlegenden, hintergreifenden Anschläge der Sitzeinrichtung 23 auch, wie aus der DE 20 2014 006 501 U1 bekannt, zentral angeordnet sein. Es wird wenigstens ein Anschlag benötigt.

Mit Blick auf die Rückseite der Rückenlehne 13, und daher mit Blick von der Korbspitze zur Schiebeeinrichtung 3, zeigt Fig. 2 die Kindersitzeinrichtung 7 in Längsrichtung des Einkaufswagens 1 betrachtet. Auch bei dieser Darstellung sind gewisse horizontale und vertikale Stäbe der Rückwand 9 und der Rückenlehne 13 weggelassen, um eine deutliche Darstellung der Kindersitzanordnung zu erzielen. Es ist oben die erste horizontale Achse 8 eingezeichnet, um die sich in bekannter Weise die Rückwand 9 am Korb 4 bewegen lässt. Es ist ferner die zweite horizontale Achse 12 dargestellt, die das bekannte Bewegen der Rückenlehne 13 ermöglicht und die ebenfalls eingezeichnete dritte horizontale Achse 22 erlaubt das Bewegen der Sitzeinrichtung 23 und der Abdeckeinrichtung 24. Die Kindersitzeinrichtung 7 ist in Nichtgebrauchslage dargestellt, in der alle Teile der Kindersitzanordnung 7 eng aneinander liegen. Die Kindersitzanordnung 7 befindet sich also in gefaltetem Zustand, in dem die Sitzeinrichtung 23 nach unten hängt und die Abdeckeinrichtung 24 nach oben gerichtet ist. Die Rückenlehne 13 weist oberhalb der Sitzeinrichtung 23 gelegen eine Anzahl vertikaler Sützstäbe 19 auf, die in bekannter Weise eine Anordnung zum Anlehnen des Rückens des Kleinkindes bilden. Die Stützstäbe 19 befinden sich in einem ersten Raumbereich, der betrachtet man die Zeichnung, am nächsten zum Bildbetrachter angeordnet ist. Die Stützstäbe 19 sind in bekannter Weise mit zwei Querstäben 20 verbunden, die sich in einem zweiten Raumbereich befinden, der in der Zeichnung tiefer in die Bildebene reicht und somit weiter vom Bildbetrachter entfernt ist als der erste Raumbereich. Die beiden Querstäbe 20 wiederum sind mit den beiden vertikalen Stäben 15 der Rückenlehne 13 verbunden, wobei die beiden vertikalen Stäbe 15 im Beispiel die beiden Außenseiten 21 der Rückenlehne 13 bilden. Die beiden vertikalen Stäbe 15 befinden sich in einem dritten Raumbereich, der noch tiefer in die Bildebene eindringt und somit noch weiter vom Bildbetrachter entfernt ist. Bevorzugt am oberen Ende 27 der Abdeckeinrichtung 24, jedenfalls an den beiden Seiten 25 der Abdeckeinrichtung 24 angeordnet, ist jeweils einer der Vorsprünge 26 vorgesehen, wobei je-der Vorsprung 26 spiegelbildlich zum anderen Vorsprung 26 angeordnet, rechts und links nach außen gerichtet ist. Auf Höhe der beiden Vorsprünge 26, also in dem vorbestimmten Raumbereich 17 weicht jeder vertikale Stab 15, bzw. der durch den vertikalen Stab 15 gebildete Gleitabschnitt 28 von seiner vertikalen Richtung so ab, dass an jedem vertikalen Stab 15 jeweils ein von den Vorsprüngen 26 der Abdeckeinrichtung 24 in Nichtgebrauchslage der Kindersitzeinrichtung 7 beanspruchter Raum 18 gebildet ist. Die beiden Räume 18 befinden sich zwischen den Stäben 15 und somit im dritten Raumbereich ebenso wie zumindest teilweise zwischen den Enden der Querstäbe 20 und somit auch im zweiten Raumbereich. Dies ist notwendigerweise so, da beim Falten der Kindersitzanordnung aus der Gebrauchslage, in der die Abdeckeinrichtung 24 auf der Sitzeinrichtung 23 aufliegt, in die Nichtgebrauchslage die Vorsprünge 26 in den zweiten Raumbereich eintauchen. Entscheidend ist daher, dass die Gleitabschnitte 28, bzw. hier die Stäbe 15, den zweiten und dritten Raumbereich dort, d.h. in den von den Vorsprüngen 26 in Nichtgebrauchslage beanspruchten Räumen 18, nicht beanspruchen.

Dafür können die Stäbe 15, wie in der Zeichnung und gemäß einer ersten Ausführung, entlang der Längsrichtung des Einkaufswagens 1 betrachtet, im dritten Raumbereich verbleibend seitlich ausweichen. Eine zweite, äquivalente Ausführung verwendet bevorzugt die links und rechts äußersten Stützstäbe 19 anstelle der Stäbe 15 als Gleiteinrichtung 28. Die verwendeten Stützstäbe 19 weichen dieser zweiten Ausführung gemäß aus dem dritten Raumbereich, den zweiten Raumbereich durchquerend, in den ersten Raumbereich aus, der von den Vorsprüngen 26 in der Nichtgebrauchslage nicht beansprucht wird. Dafür sind sie wahlweise in einem Zwischenabschnitt gebogen oder sie sind gerade und stehen insgesamt schräg zu den übrigen, nur den ersten Raumbereich beanspruchenden Stützstäben 19. Die schräg stehenden oder aus dem dritten in den ersten Raumbereich gebogenen Stützstäbe 19 bilden Gleitabschnitte 28 derart, dass die Vorsprünge an den Gleitabschnitten 28 der Rückenlehne 13 dann entlang gleiten, wenn es gilt, die Kindersitzanordnung 7 aus der Gebrauchslage in die Nichtgebrauchslage oder umgekehrt zu bewegen. Die Gleitabschnitte 28 sind zu beiden Seiten eines zentralen Abschnitts 29 der Rückenlehne 13 angeordnet, dessen vertikale Stützstäbe 19 nur den ersten Raumbereich und dessen horizontale Querstäbe 20 bevorzugt nur den zweiten Raumbereich beanspruchen. Ebenso können gemäß einer dritten äquivalenten Ausführung im dritten und/oder zweiten Raumbereich angeordneten Gleitabschnitte 28 auch unterhalb der jeweiligen Räume 18 enden, so dass sie die von den Vorsprüngen 26 in Nichtgebrauchslage beanspruchten Räume 18 nicht beanspruchen. Während die erste und zweite äquivalente Ausführung bevorzugt im Falle einer aus Draht gefertigten Rückenlehne 13 Anwendung finden, eignet sich die dritte äquivalente Ausführung bevorzugt für eine aus Kunststoff gefertigte Rückenlehne 13.

In der in der Zeichnung dargestellten Ausführung liegen die Vorsprünge 26 nicht an den beiden vertikalen Stäben 15 an, so dass die Vorsprünge 26, den zweiten Raumbereich nutzend, nicht zwischen den beiden vertikalen Stäben 15 und weiteren vertikalen Stäben 11 liegen, die der Rückwand 9 angehören. Im Falle der zweiten äquivalenten Ausführung können in Nichtgebrauchslage der Kindersitzeinrichtung die Vorsprünge 26 an den die Gleitabschnitte 28 bildenden Stützstäben 19 anliegen, da der jeweilige Abschnitt der Stützstäbe 19, an dem die Vorsprünge 26 anliegen, den ersten Raumbereich beansprucht, während sich die Vorsprünge 26 im zweiten Raumbereich befinden. Da die vertikalen Stütz-stäbe 19 auf die Querstäbe 20 aufgesetzt sind, ergibt sich im Bereich der vertikalen Stützstäbe 19 ein dem zweiten Raumbereich entsprechender Freiraum, der in Nichtgebrauchslage der Kindersitzanordnung 7 zumindest vom größten Teil des übrigen Volumens der Abdeckeinrichtung 24, d.h. deren zentralem Abschnitt 29 genutzt wird. Nicht nur die beiden Vorsprünge 26, sondern die Abdeckeinrichtung 24 insgesamt vergrößern somit nicht die Dicke der Kindersitzanordnung 7 in gefaltetem Zustand. Damit kann die erfinderische Lösung, wie in der WO 2012/034556 A2 vorgeschlagen, auch bei der hier beschriebenen, mit einer Abdeckeinrichtung 24 ausgestatteten Kindersitzanordnung 7 verwirklicht werden. Je nach Aufbau und Gestaltung der Kindersitzanordnung 7 können zwei vertikale Stäbe 11, die rechts und links an der Rückwand 9 angeordnet sind, und die sich in nächster, also unmittelbarer Nachbarschaft zu den beiden vertikalen Stäben 15 der Rückenlehne 13 befinden, in gleicher Weise nach außen und wieder zurücckehrend geformt sein, um ebenfalls jeweils ein Vergrößern der Dicke der Kindersitzanordnung 7 durch Stäbe 11 und 15 zu vermeiden. Die vertikalen Stäbe 11 der Rückwand 9 erstrecken sich dann parallel und in geringem Abstand zu den vertikalen Stäben 15 der Rückenlehne 13. In der Zeichnung sind hälftig beide Gestaltungsformen dargestellt. Rechts ist jene Gestaltungsform gezeigt, bei der die vertikalen Stäbe 11 der Rückwand 9 mit Rücksicht auf die durch die vertikalen Stäbe 15 der Rückenlehne 13 gebildeten von den Vorsprüngen 26 in Nichtgebrauchslage beanspruchten Räume 18 entsprechend gegenläufig nach außen gebogen sind. In beiden Fällen jedenfalls sind die beiden von den Vorsprüngen in Nichtgebrauchslage beanspruchten Räume 18 rechts und links an der Rückenlehne 13 immer vorhanden.

Allen beschriebenen äquivalenten Ausführungen gemeinsam ist, dass die Abdeckeinrichtung 24 zwei gegenläufig nach außen gerichtete Vorsprünge 26 aufweist, dass die Rückenlehne 13 einen zentralen Abschnitt 29 und seitlich an den zentralen Abschnitt 29 angrenzend zwei Gleitabschnitte 28 aufweist derart, dass die zwischen der Rückwand 9 und der Rückenlehne 13 befindlichen Vorsprünge 26 an den Gleitabschnitten 28 der Rückenlehne 13 dann entlang gleiten, wenn es gilt, die Kindersitzanordnung 7 aus der Gebrauchslage in die Nichtgebrauchslage oder umgekehrt zu bewegen, wobei die Gleitabschnitte 28 zu den Seiten des zentralen Abschnitts 29 der Rückenlehne 13 zumindest teilweise nicht parallel verlaufen und/oder in vertikaler Richtung kürzer sind als der zentrale Abschnitt 29 derart, dass jeweils ein von den Vorsprüngen 26 in Nichtgebrauchslage der Kindersitzanordnung 7 beanspruchter Raum 18 gebildet ist.

Als Gebrauchslage wird hier diejenige Anordnung bezeichnet, in der die Abdeckeinrichtung 24 auf der Sitzeinrichtung 23 liegend als Sitzauflage nutzbar ist und die Beinlöcher 10 der Rückwand 9 nicht von der Abdeckeinrichtung 24 verdeckt sind. Der zentrale Abschnitt 29 der Rückenlehne ist vertikal begrenzt durch die seitlich äußersten, nur den ersten Raumbereich beanspruchenden vertikalen Stäbe 19 und ist horizontal begrenzt durch die mit den Stützstäben 19 verbundenen Querstäbe 20. Anstelle der Querstäbe 20 und Stützstäbe 19 kann der zentrale Abschnitt 29 durch ein Flächenteil gebildet sein, das entsteht, wenn die Zwischenräume zwischen den Stützstäben 19 zumindest teilweise geschlossen werden, während der Freiraum zwischen den Querstäben 20 bestehen bleibt. Gemäß einer ersten vorteilhaften Ausführung ist der zentrale Abschnitt 29 der Rückenlehne 13 mit in einer Ebene liegenden und durch Zwischenräume getrennten Stützstäben 19 gebildet, und es ist jeder Gleitabschnitt 28 jeweils durch wenigstens einen ganz oder teilweise nicht in dieser Ebene liegenden Stab 15, 19 gebildet. Dieser Stab kann wahlweise und wie in der Zeichnung dem Stab 15 oder links und rechts jeweils äußersten Stützstäben 19 entsprechen, die anders als in der Zeichnung den ersten Raumbereich verlassend, nicht mehr dem zentralen Abschnitt 29 der Rückenlehne angehören.

Gemäß einer zweiten vorteilhaften Ausführung ist, von der Zeichnung abweichend, jeder Gleitabschnitt 28 jeweils durch wenigstens einen Stab 15, 19 gebildet, dessen erstes Ende näher am zentralen Abschnitt 29 der Rückenlehne 13 liegt als dessen zweites Ende. Dies kann insbesondere dann der Fall sein, wenn abweichend von Fig. 1 und Fig. 2 anstelle der Stäbe 15 links und rechts äußerste und als Gleitabschnitte 28 dienende Stützstäbe 19 zur Seite ausweichend gebogen sind.

Gemäß einer dritten vorteilhaften Ausführung ist jeder Gleitabschnitt 28 durch wenigstens einen gebogenen Stab 15 gebildet, der in einem vorbestimmten Bereich 17 vom zentralen Abschnitt 29 zurückweicht. Diese Ausführung ist beispielhaft in Fig. 1 und Fig. 2 dargestellt.

Gemäß einer vierten vorteilhaften Ausführung erstrecken sich vertikale Stäbe 11 der Rückwand 9, die unmittelbar zu Gleitabschnitten 28 bildenden vertikalen Stäben der Rückenlehne 13 benachbart sind, parallel zu diesen. Diese Ausführung ist in Fig. 2 auf der linken Seite dargestellt.

Gemäß einer fünften vorteilhaften Ausführung ist, abweichend von der Zeichnung, jeder Gleitabschnitt 28 am zentralen Abschnitt 29 der Rückenlehne 13 angeformt. Diese Ausführung eignet sich insbesondere für eine aus Kunststoff gefertigte Rückenlehne 13. Im Falle einer solchen Rückenlehne 13 sind die Stützstäbe 19 bevorzugt durch eine Fläche ersetzt und es treten anstelle der Querstäbe 20 Rippen zur Verstärkung dieser Fläche. Auch die Stäbe 15 sind dann durch Rippen oder verstärkte Abschnitte ersetzt.

Gemäß einer sechsten bevorzugten Ausführungsform, ist am oberen Ende wenigstens eines Gleitabschnitts 28 und/oder am unteren Ende wenigstens eines Vorsprungs (26) eine gegenüber der Ebene der vertikalen Stützstäbe 19 schräge Kontaktfläche vorgesehen. Dies ist insbesondere dann zweckmäßig, wenn die Gleitabschnitte 28 unterhalb der von den Vorsprüngen 26 in Nichtgebrauchslage beanspruchten Räume 18 enden. Mit Hilfe dieser schrägen Kontaktflächen können die Vorsprünge 26 aus dem zweiten Raumbereich, in dem sie sich in Nichtgebrauchslage befinden, auf die Gleitelemente 28 gehoben werden, wenn die Kindersitzanordnung 7 aus der Nichtgebrauchslage in die Gebrauchslage bewegt wird. Ohne solche schrägen Kontaktflächen würden untere Kante der Vorsprünge 26 und obere Kante der Gleitelemente 28 aneinanderstoßen und die Teile würden miteinander verhaken.

Unter dem Begriff "Einkaufswagen" sind hier alle von Hand bewegbare Transportwagen erfasst, die sich unabhängig von der Art des vorliegenden Marktes, in dem diese Wagen eingesetzt sind, zum Einkaufen von Ware und zum Transportieren von Ware eignen.

## Patentansprüche

1. Mit gleichen Wagen stapelbarer Einkaufswagen (1), mit einem Korb (4) zur Aufnahme von Ware, mit einer faltbaren Kindersitzanordnung (7), die zum Verschließen des rückwärtigen offenen Bereichs des Korbes (4) bestimmt ist und sich in das Korbinnere und wieder zurück bewegen lässt, wobei die Kindersitzanordnung (7) eine mit zwei Beinlöchern (10) ausgestattete Rückwand (9), eine an der Rückwand (9) bewegbar gelagerte Rückenlehne (13), sowie eine Sitzeinrichtung (23) aufweist, die in Gebrauchslage der Kindersitzanordnung (7) als Sitzgelegenheit für ein Kleinkind nutzbar und zum Begrenzen des Schwenkbereichs der Rückenlehne (13) vorgesehen ist, wobei die Kindersitzanordnung (7) mit einer an der Rückwand schwenkbar angeordneten Abdeckeinrichtung (24) ausgestattet ist, die auf der Sitzeinrichtung (23) ruht und sich nach oben und wieder zurück schwenken lässt, um in nach oben geschwenkter Lage die Beinlöcher (10) zu verschließen und um ebenfalls in dieser Lage zusammen mit der Sitzeinrichtung (23), der Rückwand (9) und der Rückenlehne (13) eine weitere Abstelleinrichtung für Ware zu bilden, und wobei in Nichtgebrauchslage, also in gefaltetem Zustand der Kindersitzanordnung (7), die Rückwand (9), die Sitzeinrichtung (23) sowie die Abdeckeinrichtung (24) eng aneinander liegen, die Sitzeinrichtung (23) dabei nach unten hängt und die Abdeckeinrichtung (24) nach oben gerichtet ist, **dadurch gekennzeichnet, dass** die Abdeckeinrichtung (24) zwei gegenläufig nach außen gerichtete Vorsprünge (26) aufweist, dass die Rückenlehne (13) einen zentralen Abschnitt (29) und seitlich an den zentralen Abschnitt (29) angrenzend zwei Gleitabschnitte (28) aufweist derart, dass die zwischen der Rückwand (9) und der Rückenlehne (13) befindlichen Vorsprünge (26) an den Gleitabschnitten (28) der Rückenlehne (13) dann entlang gleiten, wenn es gilt, die Kindersitzanordnung (7) aus der Gebrauchslage in die Nichtgebrauchslage oder umgekehrt zu bewegen, wobei die Gleitabschnitte (28) zu den Seiten des zentralen Abschnitts (29) der Rückenlehne (13) zumindest teilweise nicht parallel verlaufen und/oder in vertikaler Richtung kürzer sind als der zentrale Abschnitt (29) derart, dass jeweils ein von den Vorsprüngen (26) in Nichtgebrauchslage der Kindersitzanordnung (7) beanspruchter Raum (18) gebildet ist.

2. Einkaufswagen (1) nach Anspruch 1, **dadurch gekennzeichnet, dass** der zentrale Abschnitt (29) der Rückenlehne (13) mit in einer Ebene liegenden und durch Zwischenräume getrennten Stützstäben (19) gebildet ist, und dass jeder Gleitabschnitt (28) jeweils durch wenigstens einen ganz oder teilweise nicht in dieser Ebene liegenden Stab (15, 19) gebildet sind.

3. Einkaufswagen (1) nach Anspruch 1, **dadurch gekennzeichnet, dass** jeder Gleitabschnitt (28) durch wenigstens einen Stab (15, 19) gebildet ist, dessen erstes Ende näher am zentralen Abschnitt (29) der Rückenlehne (13) liegt als dessen zweites Ende.

4. Einkaufswagen (1) nach Anspruch 1, **dadurch gekennzeichnet, dass** jeder Gleitabschnitt (28) durch wenigstens einen gebogenen Stab gebildet ist, der in einem vorbestimmten Bereich (17) vom zentralen Abschnitt (29) zurückweicht.

5. Einkaufswagen (1) nach Anspruch 1, **dadurch gekennzeichnet, dass** sich vertikale Stäbe (11) der Rückwand (9), die unmittelbar zu Gleitabschnitten (28) bildenden vertikalen Stäben der Rückenlehne (13) benachbart sind, parallel zu diesen erstrecken.

6. Einkaufswagen (1) nach Anspruch 1, **dadurch gekennzeichnet, dass** die Gleitabschnitte (28) am zentralen Abschnitt (29) der Rückenlehne (13) angeformt sind.

7. Einkaufswagen (1) nach Anspruch 1, **dadurch gekennzeichnet, dass** im Falle von Gleitabschnitten (28), die unterhalb der von den Vorsprüngen (26) in Nichtgebrauchslage beanspruchten Räumen (18) enden, am oberen Ende wenigstens eines Gleitabschnitts (28) und/oder am unteren Ende wenigstens eines Vorsprungs (26) eine gegenüber der Ebene der vertikalen Stützstäbe (19) schräge Kontaktfläche vorgesehen ist.

## Claims

1. Shopping cart (1) that can be nested with identical carts, with a basket (4) for holding goods, with a foldable child seat arrangement (7) which is intended for closing the rearward open region of the basket (4) and can be moved into the basket interior and back again, wherein the child seat arrangement (7) has a rear wall (9) equipped with two leg holes (10), a backrest (13) mounted movably on the rear wall (9) and a seat device (23) which can be used as seating for a small child in the use position of the child seat arrangement (7) and is intended for limiting the pivoting range of the backrest (13), wherein the child seat arrangement (7) is equipped with a cover device (24) which is arranged pivotably on the rear wall, rests on the seat device (23) and can be pivoted upward and back again in order to close the leg holes (10) in the upwardly pivoted position and, likewise in this position, to form, together with the seat device (23), the rear wall (9) and the backrest (13), a further device for depositing goods, and wherein, in the non-use position, that is to say in the folded state of the child seat arrangement (7), the rear wall (9), the seat device (23) and the cover device (24) are in close contact with one another, the seat device (23) hangs downward and the cover device (24) is directed upward, **characterized in that** the cover device (24) has two oppositely outwardly directed protrusions (26), **in that** the backrest (13) has a central portion (29) and two sliding portions (28) laterally adjoining the central portion (29) in such a manner that the protrusions (26) located between the rear wall (9) and the backrest (13) slide along on the sliding portions (28) of the backrest (13) if it is necessary to move the child seat arrangement (7) out of the use position into the non-use position, or vice versa, wherein the sliding portions (28) at least in part do not run parallel to the sides of the central portion (29) of the backrest (13) and/or are shorter in the vertical direction than the central portion (29), in such a manner that a space (18) which is taken up by the protrusions (26) in the non-use position of the child seat arrangement (7) is formed in each case.

2. Shopping cart (1) according to Claim 1, **characterized in that** the central portion (29) of the backrest (13) is formed with support rods (19) lying in one plane and separated by intermediate spaces, and **in that** each sliding portion (28) are respectively formed by at least one rod (15, 19) which entirely or partially does not lie in this plane.

3. Shopping cart (1) according to Claim 1, **characterized in that** each sliding portion (28) is formed by at least one rod (15, 19), the first end thereof lying closer to the central portion (29) of the backrest (13) than the second end thereof.

4. Shopping cart (1) according to Claim 1, **characterized in that** each sliding portion (28) is formed by at least one bent rod which draws back from the central portion (29) in a predetermined region (17).

5. Shopping cart (1) according to Claim 1, **characterized in that** vertical rods (11) of the rear wall (9) that are in direct proximity to vertical rods of the backrest (13) which form sliding portions (28) extend parallel to them.

6. Shopping cart (1) according to Claim 1, **characterized in that** the sliding portions (28) are formed on the central portion (29) of the backrest (13).

7. Shopping cart (1) according to Claim 1, **characterized in that**, in the case of sliding portions (28) which end below the spaces (18) taken up by the protrusions (26) in the non-use position, a contact surface which is inclined with respect to the plane of the vertical support rods (19) is provided at the top end of at least one sliding portion (28) and/or at the bottom end of at least one protrusion (26).

## Revendications

1. Chariot de courses (1) empilable avec des chariots identiques, avec une nacelle (4) destinée à recevoir des marchandises, avec un agencement de siège enfant (7) pliable qui est destiné à fermer la région ouverte côté arrière de la nacelle (4) et peut être déplacé à l'intérieur de la nacelle et puis être ramené dans sa position de départ, l'agencement de siège enfant (7) comportant une paroi arrière (9) équipée de deux trous pour les jambes (10), un dossier (13) disposé de façon à pouvoir être déplacé au niveau de la paroi arrière (9) ainsi qu'un agencement d'assise (23) pouvant être utilisé dans la position d'utilisation de l'agencement de siège enfant (7) comme potentiel siège pour un petit enfant et prévu pour limiter la zone de pivotement du dossier (13), l'agencement de siège enfant (7) étant équipé d'un dispositif de recouvrement (24) disposé de façon à pouvoir pivoter au niveau de la paroi arrière, ledit dispositif de recouvrement reposant sur l'agencement d'assise (23) et pouvant être pivoté vers le haut et de nouveau en arrière pour fermer dans la position pivotée vers le haut les trous pour les jambes (10) ainsi que pour former dans cette position, conjointement avec l'agencement d'assise (23), la paroi arrière (9) et le dossier (13), un dispositif de dépôt supplémentaire pour marchandises et, dans la position de non-utilisation, donc à l'état plié de l'agencement de siège enfant (7), la paroi arrière (9), l'agencement d'assise (23) ainsi que le dispositif de recouvrement (24) reposant étroitement les uns contre les autres, l'agencement d'assise (23) pendant en l'occurrence vers le bas et le dispositif de recouvrement (24) étant orienté vers le haut, **caractérisé en ce que** le dispositif de recouvrement (24) comporte deux saillies (26) orientées de façon opposée vers l'extérieur, **en ce que** le dossier (13) comporte une section centrale (29) et deux sections coulissantes (28) attenantes, en côté, à la section centrale (29), de telle sorte que les saillies (26) se trouvant entre la paroi arrière (9) et le dossier (13) coulissent ensuite le long des sections coulissantes (28) du dossier (13), lorsqu'il est nécessaire de déplacer l'agencement de siège enfant (7) de la position d'utilisation dans la position de non-utilisation ou inversement, les sections coulissantes (28) s'étendant au moins en partie non parallèlement aux côtés de la section centrale (29) du dossier (13) et/ou étant plus courtes dans la direction verticale que la section centrale (29) de telle sorte que respectivement un espace (18) occupé par les saillies (26) est formé dans la position de non-utilisation de l'agencement de siège enfant (7).

2. Chariot de courses (1) selon la revendication 1, **caractérisé en ce que** la section centrale (29) du dossier (13) est formée avec des barres de maintien (19) reposant dans un plan et séparées par des espaces intermédiaires et **en ce que** chaque section coulissante (28) est respectivement formée par au moins une barre (15, 19) ne reposant pas entièrement ou en partie dans ce plan.

3. Chariot de courses (1) selon la revendication 1, **caractérisé en ce que** chaque section coulissante (28) est formée par au moins une barre (15, 19) dont la première extrémité repose plus près de la section centrale (29) du dossier (13) que sa deuxième extrémité.

4. Chariot de courses (1) selon la revendication 1, **caractérisé en ce que** chaque section coulissante (28) est formée par au moins une barre courbe se repliant depuis la section centrale (29) dans une région prédéfinie (17).

5. Chariot de courses (1) selon la revendication 1, **caractérisé en ce que** les barres (11) verticales de la paroi arrière (9) situées à proximité directe des barres verticales du dossier (13) formant les sections coulissantes (28) s'étendent parallèlement à celles-ci.

6. Chariot de courses (1) selon la revendication 1, **caractérisé en ce que** les sections coulissantes (28) sont formées au niveau de la section centrale (29) du dossier (13).

7. Chariot de courses (1) selon la revendication 1, **caractérisé en ce qu'**en cas de sections coulissantes (28) prenant fin en dessous des espaces (18) occupés par les saillies (26) dans la position de non-utilisation, une surface de contact oblique par rapport au plan des barres de maintien (19) verticales est prévue au niveau de l'extrémité supérieure d'au moins une section coulissante (28) et/ou au niveau de l'extrémité inférieure d'au moins une saillie (26) .
